# EUROPEAN PATENT SPECIFICATION

(11) **EP 1 994 069 B1**
(45) Date of publication and mention of the grant of the patent: **12.04.2017**
(21) Application number: 07763044.0
(22) Date of filing: 30.01.2007
(51) Int. Cl.: C08G 18/10, C08K 7/10, C09J 175/04, C09K 3/10, B82Y 30/00, C03C 27/10, C08G 18/48, C08J 5/00

(54) **SEALANT COMPOSITION HAVING REDUCED PERMEABILITY TO GAS**
DICHTUNGSZUSAMMENSETZUNG MIT VERMINDERTER GASDURCHLÄSSIGKEIT
COMPOSITION D'ÉTANCHÉITÉ PRÉSENTANT UNE PERMÉABILITÉ RÉDUITE AUX GAZ

(30) Priority: 01.02.2006 US 345471
(43) Date of publication of application: 26.11.2008
(73) Proprietor: Momentive Performance Materials Inc., Waterford, NY 12188 (US)
(72) Inventor: LANDON, Shayne, J., Ballston Lake, NY 12091 (US)
(74) Representative: Zinnecker, Armin
(86) International application number: PCT/US2007/002386
(87) International publication number: WO 2007/089699

(56) References cited:
- EP-A1- 0 931 800
- FR-A- 1 411 160
- US-A- 4 798 878
- US-A1- 2004 180 155
- US-B1- 6 457 294
- ALEXANDRE M ET AL: "Polymer-layered silicate nanocomposites: preparation, properties and uses of a new class of materials" MATERIALS SCIENCE AND ENGINEERING R: REPORTS, ELSEVIER SEQUOIA S.A., LAUSANNE, CH, vol. 28, no. 1-2, June 2000 (2000-06), pages 1-63, XP004205143 ISSN: 0927-796X
- GINZBURG V V ET AL: "Calculating Phase Diagrams of Polymer-Platelet Mixtures Using Density Funct ional Theory: Implications for Polymer/Clay Composites" MACROMOLECULES, ACS, WASHINGTON, DC, US, vol. 32, 1999, pages 5681-5688, XP002333279 ISSN: 0024-9297

## Description

### FIELD OF THE INVENTION

This invention relates to moisture-curable silylated resin-containing compositions having reduced gas permeability and methods of using these compositions. The compositions are particularly well suited for use in the window area as an insulating glass sealant and in applications such as coatings, adhesives and gaskets.

### BACKGROUND OF THE INVENTION

Moisture-curable compositions are well known for their use as sealants. In the manufacture of Insulating glass units (IGU), for example, panels of glass are placed parallel to each other and sealed at their periphery such that the space between the panels, or the inner space, is completely enclosed. The inner space is typically filled with a gas or mixture of gases of low thermal conductivity.

Current room temperature curable (RTC) silicone sealant, while effective to some extent, still have only a limited ability to prevent the loss of low thermal conductivity gas, e.g., argon, from the inner space of an IOU. Over time, the gas will escape reducing the thermal insulation effectiveness of the IGU to the vanishing point.

A need therefore exists for an RTC composition of reduced gas permeability compared to that of known RTC compositions. When employed as the sealant for an IGU, an RTC composition of reduced gas permeability will retain the intra-panel insulating gas of an IGU for a longer period of time compared to that of a more permeable RTC composition and therefore will extend the insulating properties of the IOU over a longer period of time.

US 2004/180155 A1 discloses a moisture-curable hot melt sealant composition including a PU prepolymer, a plasticizer and a thermoplastic polymer, which can be used for the generic purpose.

### SUMMARY OF THE INVENTION

The present invention is based on the discovery that moisture-curable silylated resin-containing composition combined with modified filler has low permeability to gas or mixtures of gases. The composition is especially suitable for use as a sealant where high gas barrier properties together with the desired characteristics of softness, processability and elasticity are important performance criteria.

In accordance with the present invention, there is provided a moisture-curable silylated resin-containing composition comprising:
a) moisture-curable silylated resin, which upon curing, provides a cured resin exhibiting permeability to gas;
b) at least one organic nanoclay; and,
c) at least one solid polymer having a permeability to gas that is less than the permeability of cured resin (a).

When used as a gas barrier, e.g., in the manufacture of an IGU, the foregoing composition reduces the loss of gas(es) thus providing a longer service life of the article in which it is employed.

### DETAILED DESCRIPTION OF THE INVENTION

In accordance with the present invention, a moisture-curable silylated resin-containing composition is provided comprising: a) moisture-curable silylated resin, which upon curing, provides a cured resin i.e., hydrolyzed and subsequently crosslinked silylated polymethane (SPUR) resin, exhibiting permeability to gas in intimate admixture with; b) at least one organic nanoclay; and, c) at least one solid polymer having a permeability to gas that is less than the permeability of cured resin (a).

The compositions of the invention are useful for the manufacture of sealants, coatings, adhesives, gaskets, and the like, and are particularly suitable for use in sealants intended for insulating grass units.

The moisture-curable silylated resin (a) employed in the present invention are obtained by (i) reacting an isocyanate-terminated polyurethane (PUR) prepolymer with a suitable active hydrogen-containing silane, e.g., one possessing both hydrolyzable functionality, such as, alkoxy etc., and active hydrogen-containing functionality such as mercaptan, primary and secondary amine, preferably the latter, etc., or by (ii) reacting a hydroxyl-terminated PUR prepolymer with a suitable isocyanate-terminated silane, e.g., one possessing one to three alkoxy groups. The details of these reactions, and those for preparing the isocyanate-terminated and hydroxyl-terminated PUR prepolymers employed therein can be found in, amongst others: U.S. Patent Nos. 4,985,491, 5,919,888, 6,207,794, 6,303,731, 6,359,101 and 6,515,164 and published U.S. Patent Application Nos. 2004/0122253 and 2005/0020706 (isocyanate-terminated PUR prepolymers); U.S. Patent Nos. 3,786,081 and 4,481,367 (hydroxyl-terminated PUR prepolymers); U.S. Patent Nos. 3,627,722, 3,632,557, 3,971,751, 5,623,044, 5,852,137, 6,197,912 and 6,310,170 (moisture-curable SPUR obtained from reaction of isocyanate-terminated PUR prepolymer and reactive silane, e.g., aminoalkoxysilane); and, U.S. Patent Nos. 4,345,053, 4,625,012, 5,833,423 and published U.S. Patent Application 2002/0198352 (moisture-curable SPUR obtained from reaction of hydroxyl-terminated PUR prepolymer and isocanatosilane).

Alternatively, the moisture-curable silylated resin (a) of the present invention may also be obtained by (iii) reacting isocyanatosilane directly with polyol.

### (a) - Moisture-curable SPUR Resin Obtained From Isocyanate-terminated PUR Prepolymer

The isocyanate-terminated PUR polymers are obtained by reacting one or more polyols, advantageously, diols, with one or more polyisocyanates, advantageously, diisocyanates, in such proportions that the resulting prepolymers will be terminated with isocyanate. In the case of reacting a diol with a diisocyanate, a molar excess of diisocyanate will be employed.

Polyols utilized for the preparation of the isocyanate-terminated PUR prepolymer are poly(oxyethylene) diols, the poly(oxypropylene) diols and the poly(oxyethylene-oxypropylene) diols In one embodiment of the present invention, the polyols used in the production of the isocyanate-terminated PUR prepolymers are poly(oxyethylene) diols with equivalent weights between about 500 and 25,000. In another embodiment of the present invention, the polyols used in the production of the isocyanate-terminated PUR prepolymers are poly(oxypropylene) diols with equivalent weights between about 1,000 to 20,000. Mixtures of polyols of various structures, molecular weights and/or functionalities can also be used.

The polyether polyols can have a functionality up to about 8 but advantageously have a functionality of from about 2 to 4 and more advantageously, a functionality of 2 (i.e., diols). Especially suitable are the polyether polyols prepared in the presence of double-metal cyanide (DMC) catalysts, an alkaline metal hydroxide catalyst, or an alkaline metal alkoxide catalyst; see, for example, U.S. Pat. Nos. 3,829,505, 3,941,849, 4,242,490, 4,335,188, 4,687,851, 4,985,491, 5,096,993, 5,100,997, 5,106,874, 5,116,931, 5,136,010, 5,185,420, and 5,266,681. Polyether polyols produced in the presence of such catalysts tend to have high molecular weights and low levels of unsaturation, properties of which, it is believed, are responsible for the improved performance of inventive retroreflective articles. The polyether polyols preferably have a number average molecular weight of from about 1,000 to about 25,000, more preferably from about 2,000 to about 20,000, and even more preferably from about 4,000 to about 18,000. The polyether polyols preferably have an end group unsaturation level of no greater than about 0.04 milliequivalents per gram of polyol. More preferably, the polyether polyol has an end group unsaturation of no greater than about 0.02 milliequivalents per gram of polyol. Examples of commercially available diols that are suitable for making the isocyanate-terminate PUR prepolymer include ARCOL R-1819 (number average molecular weight of 8,000), E-2204 (number average molecular weight of 4,000), and ARCOL E-2211 (number average molecular weight of 11,000).

Any of numerous polyisocyanates, advantageously, diisocyanates, and mixtures thereof, can be used to provide the isocyanate-terminated PUR prepolymers. In one embodiment, the polyisocyanate can be diphenylmethane diisocyanate ("MDI"), polymethylene Polyphenylisocyanate ("PMDI"), paraphenylene diisocyanate, naphthylene diisocyanate, liquid carbodiimide-modified MDI and derivatives thereof, isophorone diisocyanate, dicyclohexylmethane-4,4'-diisocyanate, toluene diisocyanate ("TDI"), particularly the 2,6-TDI isomer, as well as various other aliphatic and aromatic polyisocyanates that are well-established in the art, and combinations thereof.

Silylation reactants for reaction with the isocyanate-terminated PUR prepolymers described above must contain functionality that is reactive with isocyanate and at least one readily hydrolyzable and subsequently crosslinkable group, e.g., alkoxy. Particularly useful silylation reactants are the aminosilanes, especially those of the general formula: 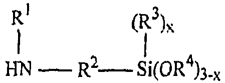 wherein R¹ is hydrogen, alkyl or cycloalkyl of up to 8 carbon atoms or aryl of up to 8 carbon atoms, R² is an alkylene group of up to 12 carbon atoms, optionally containing one or more heteroatoms, each R³ is the same or different alkyl or aryl group of up to 8 carbon atoms, each R⁴ is the same or different alkyl group of up to 6 carbon atoms and x is 0, 1 or 2. In one embodiment, R¹ is hydrogen or a methyl, ethyl, propyl, isopropyl, n-butyl, t-butyl, cyclohexyl or phenyl group, R² possesses 1 to 4 carbon atoms, each R⁴ is the same or different methyl, ethyl, propyl or isopropyl group and x is 0.

Specific aminosilanes for use herein include aminopropyltrimethoxysilane, aminopropyltriethoxysilane, aminobutyltriethoxysilane, N-(2-aminoethyl-3-aminopropyl)triethoxysilane, aminoundecyltrimethoxysilane, and aminopropylmethyldiethoxysilane, for example. Other suitable aminosilanes include, but are not limited to phenylaminopropyltriemthoxy silane, methylaminopropyltriemthoxysilane, n-butylaminopropyltrimethoxy silane, t-butyl aminopropyltrimethoxysilane, cyclohexylaminopropyltrimethoxysilane, dibutylmaleate aminopropyltriemthoxysilane, dibutylmaleate-substituted 4-amino-3,3-dimethylbutyl trimethoxy silane, N-methyl-3-amino-2-methylpropyltriemthoxysilane, N-ethyl-3-amino-2-methylpropyltrimethoxysilane, N-ethyl-3-amino-2-methylpropyidiethoxysilane, N-ethyl-3-amino-2-methylpropyoltriethoxysilane, N-ethyl-3-amino-2-methylpropylmethyidimethoxysilane, N-butyl-3-amino-2-methylpropyltriemthoxysilane, 3 -(N-methyl-3-amino-1-methyl-1-ethoxy)propyltrimethoxysilane, N-ethyl-4-amino-3,3-dimethylbutyidimethoxymethylsilane and N-ethyl-4-amino-3,3-dimethylbutyltrimethoxysilane.

A catalyst will ordinarily be used in the preparation of the isocyanate-terminated PUR prepolymers. Advantageously, condensation catalysts are employed since these will also catalyze the cure (hydrolysis followed by crosslinking) of the SPUR resin component of the curable compositions of the invention. Suitable condensation catalysts include the dialkyltin dicarboxylates such as dibutyltin dilaurate and dibutyltin acetate, tertiary amines, the stannous salts of carboxylic acids, such as stannous octoate and stannous acetate, and the like. In one embodiment of the present invention, dibutyltin dilaurate catalyst is used in the production of the PUR prepolymer. Other useful catalysts include zirconium complex (KAT XC6212, K-KAT XC=A209 available from King Industries, Inc., aluminum chelate (TYZER^{®} types available from DuPont company, and KR types available from Kenrich Petrochemical, Inc., and other organic metal, such as Zn, Co, Ni, and Fe, and the like.

### (b) Moisture-curable SPUR Resins Obtained From Hydroxyl-terminated PUR Preolymers

The moisture-curable SPUR resin can, as previously indicated, be prepared by reacting a hydroxyl-terminated PUR prepolymer with an isocyanatosilane. The hydroxyl-terminated PUR prepolymer can be obtained in substantially the same manner employing substantially the same materials, i.e., polyols, polyisocyanates and optional catalysts (preferably condensation catalysts), described above for the preparation of isocyanate-terminated PUR prepolynmers the one major difference being that the proportions of polyol and polyisocyanate will be such as to result in hydroxyl-termination in the resulting prepolymer. Thus, e.g., in the case of a diol and a diisocyanate, a molar excess of the former will be used thereby resulting in hydroxyl-terminated PUR prepolymer.

Useful silylation reactants for the hydroxyl-terminated SPUR resins are those containing isocyanate termination and readily hydrolizable functionality, e.g., 1 to 3 alkoxy groups. Suitable silylating reactants are the isocyanatosilanes of the general formula: 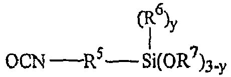 wherein R⁵ is an alkylene group of up to 12 carbon atoms, optionally containing one or more heteroatoms, each R⁶ is the same or different alkyl or aryl group of up to 8 carbon atoms, each R⁷ is the same or different alkyl group of up to 6 carbon atoms and y is 0, 1 or 2. In one embodiment, R⁵ possesses 1 to 4 carbon atoms, each R⁷ is the same or different methyl, ethyl, propyl or isopropyl group and y is 0.

Specific isocyanatosilanes that can be used herein to react with the foregoing hydroxyl-terminated PUR prepolymers to provide moisture-curable SPUR resins include isocyanatopropyltrimethoxysilane, isocyanatoisopropyl trimethoxysilane, isocyanato-n-butyltrimethoxysilane, isocyanato-t-butyltrimethoxysilane, isocyanatopropyltriethoxysilane, isocyanatoisopropyltriethoxysilane, isocynato-n-butyltriethoxysilane, isocyanato-t-butyltriethoxysilane, and the like.

### (c) Moisture-curable SPUR Resins Obtained From Reacting Isocyanatosilane directly with a Polyol

The moisture-curable SPUR resins of the present invention can be obtained from one or more polyols, advantageously, diols, reacting directly with isocyanatosilane without the initial formation of a polyurethane prepolymer. The materials, i.e., polyols and silanes (e.g., one possessing both hydrolysable and isocyanato functionality, useful for this approach to producing moisture-curable SPUR resin are described above. As such, suitable polyols include, hydroxy-terminated polyols having a molecular weight between about 4,000 to 20,000. However, mixtures of polyols of various structures, molecular weights and/or functionalities can also be used. Suitable isocyanatosilanes used to react with the foregoing polyols to provide moisture-curable SPUR resins are described above.

The urethane prepolymer synthesis and subsequent silylation reaction, as well as the direct reaction of polyol and isocyanatosilane are conducted under anhydrous conditions and preferably under an inert atmosphere, such as a blanket of nitrogen, to prevent premature hydrolysis of the alkoxysilane groups. Typical temperature range for both reaction steps, is 0° to 150° C, and more preferably between 60° and 90° C. Typically, the total reaction time for the synthesis of the silylated polyurethane is between 4 to 8 hours.

The synthesis is monitored using a standard titration technique (ASTM 2572-87) or infrared analysis. Silylation of the urethane prepolymers is considered complete when no residual -NCO can be detected by either technique.

The curable composition of the present invention includes at least one organic nanoclay filler (b). Nanoclays possess a unique morphology with one dimension being in the nanometer range. The nanoclays can form chemical complexes with an intercalant that ionically bonds to surfaces in between the layers making up the clay particles. This association of intercalant and clay particles results in a material which is compatible with many different kinds of host resins permitting the clay filler to disperse therein.

When describing the organic nanoclay filler of the present invention, the following terms have the following meanings, unless otherwise indicated.

The term "exfoliation" as used herein describes a process wherein packets of nanoclay platelets separate from one another in a polymer matrix. During exfoliation, platelets at the outermost region of each packet cleave off, exposing more platelets for separation.

The term "gallery" as used herein describes the space between parallel layers of clay platelets. The gallery spacing changes depending on the nature of the molecule or polymer occupying the space. An interlayer space between individual nanoclay platelets varies, again depending on the type of molecules that occupy the space.

The term "intercalant" as used herein includes any inorganic or organic compound capable of entering the clay gallery and bonding to the surface.

The term "intercalate" as used herein designates a clay-chemical complex wherein the clay gallery spacing has increased due to the process of surface modification. Under the proper conditions of temperature and shear, an intercalate is capable of exfoliating in a resin matrix.

The expression "modified clay" as used herein designates a clay material that has been treated with any inorganic or organic compound that is capable of undergoing ion exchange reactions with the cations present at the interlayer surfaces of the clay.

The term "nanoclay" as used herein describes clay materials that possess a unique morphology with one dimension being in the nanometer range. Nanoclays can form chemical complexes with an intercalant that ionically bonds to surfaces in between the layers making up the clay particles. This association of intercalant and clay particles results in a material which is compatible with many different kinds of host resins permitting the clay filler to disperse therein.

The expression "organic nanoclay" as use herein describes a nanoclay that has been treated or modified with an organic intercalant.

The term "organoclay" as used herein designates a clay or other layered material that has been treated with organic molecules (variously referred to as "exfoliating agents," "surface modifiers" or "intercalants") that are capable of undergoing ion exchange reactions with the cations present at the interlayer surfaces of the clay.

The nanoclays can be natural or synthetic materials. This distinction can influence the particle size and for this invention, the particles should have a lateral dimension of between about 0.01 µm and about 5 µm, and preferably between about 0.05 µm and about 2 µm, and more preferably between about 0.1 µm and about 1 µm. The thickness or the vertical dimension of the particles can in general vary between about 0.5 nm and about 10 nm and preferably between about 1 nm and about 5 nm.

Useful nanoclays for providing the organic nanoclay filler component of the composition of the invention include natural or synthetic phyllosilicates, particularly smectic clays such as montmorillonite, sodium montmorillonite, calcium montmorillonite, magnesium montmorillonite, nontronite, beidellite, volkonskoite, laponite, hectorite, saponite, sauconite, magadite, kenyaite, sobockite, svindordite, stevensite, talc, mica, kaolinite, vermiculite, halloysite, aluminate oxides, or hydrotalcites, and the like, and their mixtures. In another embodiment, useful layered materials include micaceous minerals such as illite and mixed layered illite/smectite minerals such as rectorite, tarosovite, ledikite and admixtures of illites with one or more of the clay minerals named above. Any swellable layered material that sufficiently sorbs the organic molecules to increase the interlayer spacing between adjacent phyllosilicate platelets to at least about 5 angstroms, or to at least about 10 angstroms, (when the phyllosilicate is measured dry) can be used to provide the curable compositions of the invention.

In one embodiment of the present invention, organic and inorganic compounds useful for treating or modifying the clays and layered materials include cationic surfactants such as ammonium, ammonium chloride, alkylammonium (primary, secondary, tertiary and quaternary), phosphonium or sulfonium derivatives of aliphatic, aromatic or arylaliphatic amines, phosphines or sulfides.

The curable composition can contain one or more other fillers in addition to organic nanoclay component (b). Suitable additional fillers, other than the organic nanoclay, for use herein include precipitated calcium carbonate, colloidal calcium carbonate, ground, precipitated and colloidal calcium carbonates which is treated with compounds such as stearate or stearic acid, reinforcing silicas such as fumed silicas, precipitated silicas, silica gels and hydrophobized silicas and silica gels; crushed and ground quartz, alumina, aluminum hydroxide, titanium hydroxide, diatomaceous earth, iron oxide, carbon black and graphite, talc, mica, and the like.

Optionally, the curable composition herein can also contain at least one solid polymer having a permeability to gas that is less than the permeability of the cured resin (a). Suitable polymers include polyethylenes such as low density polyethylene (LDPE), very low density polyethylene (VLDPE), linear low density polyethylene (LLDPE) and high density polyethylene (HDPE); polypropylene (PP), polyisobutylene (PIB), polyvinyl acetate(PVAc), polyvinyl alcohol (PVoH), polystyrene, polycarbonate, polyester, such as, polyethylene terephthalate (PET), polybutylene terephthalate (PBT), polyethylene napthalate (PEN), glycol-modified polyethylene terephthalate (PETG); polyvinylchloride (PVC), polyvinylidene chloride, polyvinylidene floride, thermoplastic polyurethane (TPU), acrylonitrile butadiene styrene (ABS), polymethylmethacrylate (PMMA), polyvinyl fluoride (PVF), Polyamides (nylons), polymethylpentene, polyimide (PI), polyetherimide (PEI), polether ether ketone (PEEK), polysulfone, polyether sulfone, ethylene chlorotrifluoroethylene, polytetrafluoroethylene (PTFE), cellulose acetate, cellulose acetate butyrate, plasticized polyvinyl chloride, ionomers (Surtyn), polyphenylene sulfide (PPS), styrene-maleic anhydride, modified polyphenylene oxide (PPO), and the like and mixture thereof.

The optional polymer(s) can also be elastomeric in nature, examples include, but are not limited to ethylene- propylene rubber (EPDM), polybutadiene, polychloroprene, polyisoprene, polyurethane (TPU), styrene-butadiene-styrene (SBS), styrene-ethylene-butadiene-styrene (SEEBS), polymethylphenyl siloxane (PMPS), and the like.

These optional polymers can be blended either alone or in combinations O1 in the form of coplymers, e.g. polycarbonate-ABS blends, polycarbonate polyester blends, grafted polymers such as, silane grafted polyethylenes, and silane grafted polyurethanes.

In one embodiment of the present invention, the curable composition contains a polymer selected from the group consisting of low density polyethylene (LDPE), very low density polyethylene (VLDPE), linear low density polyethylene (LLDPE), high density polyethylene (HDPE), and mixtures thereof. In another embodiment of the invention, the curable composition has a polymer selected from the group consisting of low density polyethylene (LDPE), very low density polyethylene (VLDPE), linear low density polyethylene (LLDPE), and mixture thereof. In yet another embodiment of the present invention, the optional polymer is a linear low density polyethylene (LLDPE).

The curable compositions of the present invention can include still other ingredients that are conventionally employed in RTC silicone-containing compositions such as catalysts, adhesion promoters, surfactants, colorants, pigments, plasticizers, antioxidants, UV stabilizers, biocides, etc., in known and conventional amounts provided they do not interfere with the properties desired for the cured compositions.

Catalysts typically used in the preparation of the above mentioned urethane prepolymers as well as the related silylated polyurethanes (SPUR) include, those known to be useful for facilitating crosslinking in silicone sealant compositions. The catalyst may include metal and non-metal catalysts. Examples of the metal portion of the metal condensation catalysts useful in the present invention include tin, titan ium, zirconium, lead, iron cobalt, antimony, manganese, bismuth and zinc compounds.

In one embodiment of the present invention, tin compounds useful for facilitating crosslinking in silicone sealant compositions include: tin compounds such as dibutyltindilaurate, dibutyltindiacetate, dibutyltindimethoxide, tinoctoate, isobutyltintriceroate, dibutyltinoxide, solubilized dibutyl tin oxide, dibutyltin bis-diisooctylphthalate, bis-tripropoxysilyl dioctyltin , dibutyltin bis-acetylacetone, silylated dibutyltin dioxide, carbomethoxyphenyl tin tris-uberate, isobutyltin triceroate, dimethyltin dibutyrate, dimethyltin di-neodecanoate, triethyltin tartarate, dibutyltin dibenzoate, tin oleate, tin naphthenate, butyltintri-2-ethylhexylhexoate, and tinbutyrate, and the like. In still another embodiment, tin compounds useful for facilitating crosslinking in silicone sealant compositions are chelated titanium compounds, for example, 1,3-propanedioxytitanium bis(ethylacetoacetate); di-isopropoxytitanium bis(ethylacetoacetate); and tetra-alkyl titanates, for example, tetra n-butyl titanate and tetra-isopropyl titanate. In yet another embodiment of the present invention, diorganotin bis β-diketonates is used for facilitating crosslinking in silicone sealant composition.

In one aspect of the present invention, the catalyst is a metal catalyst. In another aspect of the present invention, the metal catalyst is selected from the group consisting of tin compounds, and in yet another aspect of the invention, the metal catalyst is dibutyltin dilaurate.

The silicone composition of the present invention can include one or more alkoxysilanes as adhesion promoters. In one embodiment, the adhesion promoter can be a combination N-2-aminoethyl-3-aminopropyltrimethoxysilane and 1,3,5-tris(trimethoxysilylpropyl)isocyanurate. Other adhesion promoters useful in the present invention include N-2-aminoethyl-3-aminopropyltriethoxysilane, γ-aminopropyltriethoxysilane, γ-aminopropyltrimethoxysilane, aminopropyltrimethoxysilane, *bis*-γ-trimethoxysilypropyl)amine, N-Phenyl-γ-aminopropyltrimethoxysilane, triaminofunctionaltrimethoxysilane, γ-aminopropylmethyldiethoxysilane, γ-aminopropylmethyldiethoxysilane, methacryloxypropyltrimethoxysilane, methylaminopropyltrimethoxysilane, γ-glycidoxypropylethyldimethoxysilane, γ-glycidoxypropyltrimethoxysilane, γ-glycidoxyethyltrimethoxysilane, β-(3,4-epoxycyclohexyl)propyltrimethoxysilane, β-(3,4-epoxycyclohexyl) ethylmethyldimethoxysilane, isocyanatopropyltriethoxysilane, isocyanatopropylmethyldimethoxysilane, β-cyanoethyltrimethoxysilane, γ-acryloxypropyltrimethoxysilane, γ-methacryloxypropylmethyldimethoxysilane, 4-amino-3,3,-dimethylbutyltrimethoxysilane, N-ethyl-3-trimethoxysilyl-2-methylpropanamine, and the like.

The compositions of the present invention may optionally comprise non-ionic surfactant compound selected from the group of surfactants consisting of polyethylene glycol, polypropylene glycol, ethoxylated castor oil, oleic acid ethoxylate, alkylphenol ethoxylates, copolymers of ethylene oxide (EO) and propylene oxide (PO) and copolymers of silicones and polyethers (silicone polyether copolymers), copolymers of silicones and copolymers of ethylene oxide and propylene oxide and mixtures thereof.

The amounts of moisture-curable silylated resin (a), organic nanoclay(s) (b), optional solid polymers(s) of lower gas permeability than the cured resin (a), optional filler(s) other than organic nanoclay, optional catalyst(s), optional adhesion promoter(s) and optional ionic surfactant(s) can vary widely and, advantageously, can be selected from among the ranges indicated in the following table.

**TABLE 1: Ranges of Amounts (Weight Percent) of the Components of the Moisture-Curable Silylated Resin-Containing Composition of the Invention**

| Components of the Composition | First Range | Second Range | Third Ranee |
|---|---|---|---|
| Moisture-Curable Silylated Resin (a) | 1-99 | 10-50 | 20-30 |
| Organic Nanoclay(s)(b) | 0.1-50 | 10-30 | 15-20 |
| Solid Polymer(s) of Lower Gas Permeability than Cured Resin (a) | 0-50 | 5-40 | 10-35 |
| Filler(s) other than Organic Nanoclay | 0-90 | 5-60 | 10-40 |
| Catalyst(s) | 0.001-1 | 0.003-0.5 | 0.005-0.2 |
| Silane Adhesion Promoter(s) | 0-20 | 0.3-10 | 0.5-2 |
| Ionic Surfactant(s) | 0-10 | 0.1-5 | 0.5-0.75 |

The curable compositions herein can be obtained by procedures that are well known in the art, e.g., melt blending, extrusion blending, solution blending, dry mixing, blending in a Banbury mixer, etc., in the presence of moisture to provide a substantially homogeneous mixture.

## Claims

1. A moisture-curable silylated resin-containing composition comprising:
a) moisture-curable silylated resin, which upon curing, provides a cured resin exhibiting permeability to gas, wherein moisture-curable silylated resin (a) is at least one member selected from the group consisting of:
(i) silylated resin obtained from the reaction of isocyanate-terminated polyurethane prepolymer with active hydrogen-containing organofunctional silane,
(ii) silylated resin obtained from the reaction of hydroxyl-terminated polyurethane prepolymer with isocyanatosilane, and
(iii) silylated polymer obtained from the reaction of polyol with isocyanatosilane,
and wherein moisture-curable silylated resins (i), (ii) and (iii) are derived from poly(oxyethylene) diol, poly(oxypropylene) diol or poly(oxyethylene-oxypropylene) diol;
b) at least one organic nanoclay; and,
c) at least one solid polymer having a permeability to gas that is less than the permeability of the cured resin (a).

2. The composition of claim 1 wherein moisture-curable silylated resin (a) ranges from 1 to 99 weight percent, preferably from 10 to 50 weight percent, and more preferably from 20 to 30 weight percent of the total composition.

3. The composition of claim 1 wherein the nanoclay portion of organic nanoclay (b) is selected from the group consisting of montmorillonite, sodium montmorillonite; calcium montmorillonite, magnesium montmorillonite, nontronite, beidellite, volkonskoite, laponite, hectorite, saponite, sauconite, magadite, kenyaite, sobockite, svindordite, stevensite, vermiculite, halloysite, aluminate oxides, hydrotalcite, illite, rectorite, tarosovite, ledikite, kaolinite and, mixtures thereof.

4. The composition of claim 3 wherein the nanoclay portion of organic nanoclay (b) is modified with ammonium, primary alkylammonium, secondary alkylammonium, tertiary alkylammonium quaternary alkylammonium, phosphonium derivatives of aliphatic, aromatic or arylaliphatic amines, phosphines or sulfides or sulfonium derivatives of aliphatic, aromatic or arylaliphatic amines, phosphines or sulfides.

5. The composition of claim 1 wherein organic nanoclay (b) ranges from 0.1 to 50 weight percent, preferably from 10 to 30 weight percent, and more preferably from 15 to 20 weight percent of the total composition.

6. The composition of claim 1 wherein solid polymer (c) is selected from the group consisting of low density polyethylene, very low density polyethylene, linear low density polyethylene, high density polyethylene, polypropylene, polyisobutylene, polyvinyl acetate, polyvinyl alcohol, polystyrene, polycarbonate, polyester, such as, polyethylene terephthalate, polybutylene terephthalate, polyethylene napthalate, glycol-modified polyethylene terephthalate, polyvinylchloride, polyvinylidene chloride, polyvinylidene fluoride, thermoplastic polyurethane, acrylonitrile butadiene styrene, polymethylmethacrylate, polyvinyl fluoride, polyamides, polymethylpentene, polyimide, polyetherimide, polether ether ketone, polysulfone, polyether sulfone, ethylene chlorotrifluoroethylene, polytetrafluoroethylene, cellulose acetate, cellulose acetate butyrate, plasticized polyvinyl chloride, ionomers, polyphenylene sulfide, styrene-maleic anhydride, modified polyphenylene oxide, ethylene-propylene rubber, polybutadiene, polychloroprene, polyisoprene, polyurethane, styrene-butadiene-styrene, styrene-ethylene-butadiene-styrene, polymethylphenyl siloxane and mixtures thereof.

7. The composition of claim 1 which further comprises at least one optional component selected from the group consisting of adhesion promoter, surfactant, filler other than organic nanoclay, colorant, pigment, plasticizer, antioxidant, UV stabilizer, and biocide.

8. The composition of claim 7 wherein the adhesion promoter is selected from the group consisting of n-2-aminoethyl-3-aminopropyltrimethoxysilane, 1,3,5-tris(trimethoxysilylpropyl)isocyanurate, γ-aminopropyltriethoxysilane, γ-aminopropyltrimethoxysilane, aminopropyltrimethoxysilane, bis-γ-trimethoxysilypropyl)amine, N-Phenyl-γ-aminopropyltrimethoxysilane, triaminofumctionaltrimethoxysilane, γ-aminopropylmethyldiethoxysilane, γ-aminopropylmethyldiethoxysilane, methacryloxypropyltrimethoxysilane, methylaminopropyltrimethoxysilane, γ-glycidoxypropylethyldimethoxysilane, γ-glycidoxypropyltrimethoxysilane, γ-glycidoxyethyltrimethoxysilane, β-(3,4-epoxycyclohexyl)propyltrimethoxysilane, β-(3,4-epoxycyclohexyl) ethylmethyldimethoxysilane, isocyanatopropyltriethoxysilane, isocyanatopropylmethyldimethoxysilane, β-cyanoethyltrimethoxysilane, γ-acryloxypropyltrimethoxysilane, γ-methacryloxypropylmethyldimethoxysilane, 4-amino-3,3,-dimethylbutyltrimethoxysilane, n-ethyl-3-trimethoxysilyl-2-methylpropanamine, and mixtures thereof.

9. The composition of claim 7 wherein the surfactant is a nonionic surfactant selected from the group consisting of polyethylene glycol, polypropylene glycol, ethoxylated castor oil, oleic acid ethoxylate, alkylphenol ethoxylates, copolymers of ethylene oxide and propylene oxide and copolymers of silicones and polyethers, copolymers of silicones and copolymers of ethylene oxide and propylene oxide and mixtures thereof.

10. The composition of claim 9 wherein the non-ionic surfactant is selected from the group consisting of copolymers of ethylene oxide and propylene oxide, copolymers of silicones and polyethers, copolymers of silicones and copolymers of ethylene oxide and propylene oxide and mixtures thereof.

11. The composition of claim 7 wherein the filler other than the organic nanoclay is selected from the group consisting of calcium carbonate, precipitated calcium carbonate, colloidal calcium carbonate, calcium carbonate treated with compounds stearate or stearic acid, fumed silica, precipitated silica, silica gels, hydrophobized silicas, hydrophilic silica gels, crushed quartz, ground quartz, alumina, aluminum hydroxide, titanium hydroxide, clay, kaolin, bentonite montmorillonite, diatomaceous earth, iron oxide, carbon black and graphite, mica, talc, and mixtures thereof.

12. A sealant, adhesive or coating composition prepared with the moisture-curable silylated resin-containing composition of any preceding claim.

13. The cured silylated resin-containing composition of any one of claims 1 to 11.

## Patentansprüche

1. Feuchtigkeitshärtendes silyliertes Harz enthaltende Zusammensetzung, umfassend:
a) ein feuchtigkeitshärtendes silyliertes Harz, welches bei Härten ein gehärtetes Harz vorsieht, das Gaspermeabilität aufweist, wobei feuchtigkeitshärtendes silyliertes Harz (a) mindestens ein Element gewählt aus der Gruppe bestehend aus:
(i) silyliertem Harz, das aus der Reaktion von isocyanatterminiertem Polyurethan-Präpolymer mit aktiven Wasserstoff enthaltendem organofunktionellen Silan erhalten wird,
(ii) silyliertem Harz, das aus der Reraktion von hydroxylterminiertem Polyurethan-Präpolymer mit Isocyanatosilan erhalten wird, und
(iii) silyliertem Polymer, das aus der Reaktion von Polyol mit Isocyanatosilan erhalten wird,
ist,
und wobei feuchtigkeitshärtende silylierte Harze (i), (ii) und (iii) aus Poly(oxyethylen)diol, Poly(oxypropylen)diol oder Poly(oxyethylen-Oxypropylen)diol gewonnen werden;
b) mindestens einen organischen Nanoton; und
c) mindestens ein Feststoffpolymer mit einer Gaspermeabilität, die geringer als die Permeabilität des gehärteten Harzes (a) ist.

2. Zusammensetzung nach Anspruch 1, wobei feuchtigkeitshärtendes silyliertes Harz (a) von 1 bis 99 Gewichtsprozent, bevorzugt von 10 bis 50 Gewichtsprozent und bevorzugter von 20 bis 30 Gewichtsprozent der Gesamtzusammensetzung reicht.

3. Zusammensetzung nach Anspruch 1, wobei der Nanotonanteil von organischem Nanoton (b) gewählt ist aus der Gruppe bestehend aus Montmorillonit, Natriummontmorillonit, Calciummontmorillonit, Magnesiummontmorillonit, Nontronit, Beidellit, Volkonskoit, Laponit, Hectorit, Saponit, Sauconit, Magadit, Kenyait, Sobockit, Svindordit, Stevensit, Vermiculit, Halloysit, Aluminatoxiden, Hydrotalcit, Illit, Rectorit, Tarosovit, Ledikit, Kaolinit und Mischungen derselben.

4. Zusammensetzung nach Anspruch 3, wobei der Nanotonanteil von organischem Nanoton (b) mit Ammonium, primärem Alkylammonium, sekundärem Alkylammonium, tertiärem Alkylammonium, quaternärem Alkylammonium, Phosphoniumderivaten von aliphatischen, aromatischen oder arylaliphatischen Aminen, Phosphinen oder Sulfiden oder Sulfoniumderivaten von aliphatischen, aromatischen oder arylaliphatischen Aminen, Phosphinen oder Sulfiden modifiziert ist.

5. Zusammensetzung nach Anspruch 1, wobei der organische Nanoton (b) von 0,1 bis 50 Gewichtsprozent, bevorzugt von 10 bis 30 Gewichtsprozent und bevorzugter von 15 bis 20 Gewichtsprozent der Gesamtzusammensetzung reicht.

6. Zusammensetzung nach Anspruch 1, wobei Feststoffpolymer (c) gewählt ist aus der Gruppe bestehend aus Polyethylen niedriger Dichte, Polyethylen sehr niedriger Dichte, linearem Polyethylen niedriger Dichte, Polyethylen hoher Dichte, Polypropylen, Polyisobutylen, Polyvinylacetat, Polyvinylalkohol, Polystyren, Polycarbonat, Polyester, wie etwa Polyethylenterephthalat, Polybutylenterephthalat, Polyethylennapthalat, glykolmodifiziertem Polyethylenterephthalat, Polyvinylchlorid, Polyvinylidenchlorid, Polyvinylidenfluorid, thermoplastischem Polyurethan, Acrylnitrilbutadienstyrol, Polymethylmethacrylat, Polyvinylfluorid, Polyamiden, Polymethylpenten, Polyimid, Polyetherimid, Polyetheretherketon, Polysulfon, Polyethersulfon, Ethylenchlortrifluorethylen, Polytetrafluorethylen, Celluloseacetat, Celluloseacetatbutyrat, plastifiziertem Polyvinylchlorid, Ionomeren, Polyphenylensulfid, Styrol-Maleinsäureanhydrid, modifiziertem Polyphenylenoxid, Ethylene-Propylen-Kautschuk, Polybutadien, Polychloropren, Polyisopren, Polyurethan, Styrol-Butadien-Styrol, Styrol-Ethylen-Butadien-Styrol, Polymethylphenylsiloxan und Mischungen derselben.

7. Zusammensetzung nach Anspruch 1, welche weiterhin mindestens eine optionale Komponente gewählt aus der Gruppe bestehend aus Haftvermittler, grenzflächenaktivem Stoff, anderem Füllstoff als organischer Nanoton, Farbstoff, Pigment, Weichmacher, Antioxidans, UV-Stabilisator und Biozid umfasst.

8. Zusammensetzung nach Anspruch 7, wobei der Haftvermittler gewählt ist aus der Gruppe bestehend aus n-2-Aminoethyl-3-aminopropyltrimethoxysilan, 1,3,5-Tris(trimethoxysilylpropyl)isocyanurat, γ-Aminopropyltriethoxysilan, γ-Aminopropyltrimethoxysilan, Aminopropyltrimethoxysilan, Bis-γ-trimethoxysilypropyl)amin, N-Phenyl-γ-aminopropyltrimethoxysilan, triaminofunktionellem Trimethoxysilan, γ-Aminopropylmethyldiethoxysilan, γ-Aminopropylmethyldiethoxysilan, Methacryloxypropyltrimethoxysilan, Methylaminopropyltrimethoxysilan, γ-Glycidoxypropylethyldimethoxysilan, γ-Glycidoxypropyltrimethoxysilan, γ-Glycidoxyethyltrimethoxysilan, β-(3,4-Epoxycyclohexyl)propyltrimethoxysilan, β-(3,4-Epoxycyclohexyl) ethylmethyldimethoxysilan, Isocyanatopropyltriethoxysilan, Isocyanatopropylmethyldimethoxysilan, β-Cyanoethyltrimethoxysilan, γ-Acryloxypropyltrimethoxysilan, γ-Methacryloxypropylmethyldimethoxysilan, 4-Amino-3,3,-dimethylbutyltrimethoxysilan, n-Ethyl-3-trimethoxysilyl-2-methylpropanamin und Mischungen derselben.

9. Zusammensetzung nach Anspruch 7, wobei der grenzflächenaktive Stoff ein nichtionischer grenzflächenaktiver Stoff gewählt aus der Gruppe bestehend aus Polyethylenglycol, Polypropylenglycol, ethoxyliertem Kastoröl, Ölsäureethoxylat, Alkylphenolethoxylaten, Copolymeren von Ethylenoxid und Propylenoxid und Copolymeren von Siliconen und Polyethern, Copolymeren von Siliconen und Copolymeren von Ethylenoxid und Propylenoxid und Mischungen derselben ist.

10. Zusammensetzung nach Anspruch 9, wobei der nichtionische grenzflächenaktive Stoff gewählt ist aus der Gruppe bestehend aus Copolymeren von Ethylenoxid und Propylenoxid, Copolymeren von Siliconen und Polyethern, Copolymeren von Siliconen und Copolymeren von Ethylenoxid und Propylenoxid und Mischungen derselben.

11. Zusammensetzung nach Anspruch 7, wobei der andere Füllstoff als organischer Nanoton gewählt ist aus der Gruppe bestehend aus Calciumcarbonat, gefälltem Calciumcarbonat, kolloidem Calciumcarbonat, Calciumcarbonat behandelt mit den Verbindungen Stearat oder Stearinsäure, pyrogener Kieselsäure, gefällter Kieselsäure, Kieselsäuregelen, hydrophobierten Kieselsäuren, hydrophilen Kieselsäuregelen, zerstoßenem Quartz, gemahlenem Quartz, Aluminiumoxid, Aluminiumhydroxid, Titanhydroxid, Ton, Kaolin, Bentonitmontmorillonit, Diatomeenerde, Eisenoxid, Carbon Black und Graphit, Glimmer, Talkum und Mischungen derselben.

12. Dichtmittel-, Klebstoff- oder Beschichtungszusammensetzung, die mit der feuchtigkeitshärtendes silyliertes Harz enthaltenden Zusammensetzung nach einem vorherigen Anspruch erzeugt ist.

13. Gehärtetes silyliertes Harz enthaltende Zusammensetzung nach einem der Ansprüche 1 bis 11.

## Revendications

1. Composition contenant de la résine silylée durcissable à l'humidité comprenant :
a) de la résine silylée durcissable à l'humidité, qui lors du durcissement, produit une résine durcie présentant une perméabilité aux gaz, la résine silylée durcissable à l'humidité (a) étant au moins un membre choisi dans le groupe constitué de :
(i) résine silylée obtenue à partir de la réaction d'un prépolymère polyuréthane à terminaison isocyanate avec un silane organofonctionnel contenant de l'hydrogène actif,
(ii) résine silylée obtenue à partir de la réaction d'un prépolymère polyuréthane à terminaison hydroxyle avec un isocyanatosilane, et
(iii) polymère silylé obtenu à partir de la réaction d'un polyol avec un isocyanatosilane,
les résines silylées durcissables à l'humidité (i), (ii) et (iii) étant dérivées de poly(oxyéthylène) diol, poly(oxypropylène) diol ou poly(oxyéthylene-oxypropylène) diol ;
b) au moins une nanoargile organique ; et
c) au moins un polymère solide ayant une perméabilité aux gaz qui est inférieure à la perméabilité de la résine (a) durcie.

2. Composition selon la revendication 1 dans laquelle
la résine silylée durcissable à l'humidité (a) constitue de 1 à 99 pour-cent en poids, de préférence de 10 à 50 pour-cent en poids, et plus préférablement de 20 à 30 pour-cent en poids de la composition totale.

3. Composition selon la revendication 1 dans laquelle
la partie nanoargile de la nanoargile organique (b) est choisie dans le groupe constitué de montmorillonite, montmorillonite sodique, montmorillonite calcique, montmorillonite magnésique, nontronite, beidellite, volkonskoïte, laponite, hectorite, saponite, sauconite, magadite, kenyaïte, sobockite, svindordite, stevensite, vermiculite, halloysite, oxydes d'aluminates, hydrotalcite, illite, rectorite, tarosovite, ledikite, kaolinite et des mélanges de celles-ci.

4. Composition selon la revendication 3 dans laquelle
la partie nanoargile de la nanoargile organique (b) est modifiée avec un ammonium, un alkylammonium primaire, un alkylammonium secondaire, un alkylammonium tertiaire, un alkylammonium quaternaire, des dérivés phosphonium d'amines aliphatiques, aromatiques ou arylaliphatiques, des dérivés phosphines ou sulfures ou sulfonium d'amines aliphatiques, aromatiques ou arylaliphatiques, des phosphines ou des sulfures.

5. Composition selon la revendication 1 dans laquelle
la nanoargile organique (b) constitue de 0,1 à 50 pour-cent en poids, de préférence de 10 à 30 pour-cent en poids et plus préférablement de 15 à 20 pour-cent en poids de la composition totale.

6. Composition selon la revendication 1 dans laquelle
un polymère solide (c) est choisi dans le groupe constitué de poléthylène basse densité, poléthylène très basse densité, poléthylène basse densité linéaire, polyéthylène haute densité, polypropylène, polyisobutylène, acétate de polyvinyle, alcool polyvinylique, polystyrène, polycarbonate, polyester, tel que polyéthylène téréphtalate, polybutylène téréphtalate, polyéthylène naphtalate, polyéthylène téréphtalate à modification glycol, poly(chlorure de vinyle), poly(chlorure de vinylidène), poly(fluorure de vinylidène), polyuréthane thermoplastique, acrylonitrile butadiène styrène, polyméthylméthacrylate, poly(fluorure de vinyle), polyamides, polyméthylpentène, polyimide, polyétherimide, polyéther éther cétone, polysulfone, polyéther sulfone, éthylene chlorotrifluoroéthylène, polytétrafluoroéthylène, acétate de cellulose, acétate butyrate de cellulose, poly(chlorure de vinyle) plastifié, ionomères, poly(sulfure de phénylène), styrène-anhydride maléique, oxyde de polyphénylène modifié, caoutchouc éthylène-propylène, polybutadiène, polychloroprène, polyisoprène, polyuréthane, styrène-butadiène-styrène, styrène-éthylène-butadiène-styrène, polyméthylphényl siloxane et des mélanges de ceux-ci.

7. Composition selon la revendication 1 qui comprend en outre au moins un composant optionnel choisi dans le groupe constitué d'un promoteur d'adhérence, un tensioactif, une charge autre qu'une nanoargile organique, un colorant, un pigment, un plastifiant, un antioxydant, un stabilisant aux UV et un biocide.

8. Composition selon la revendication 7 dans laquelle
le promoteur d'adhérence choisi dans le groupe constitué de n-2-aminoéthyl-3-aminopropyltriméthoxysilane, 1,3,5-tris(triméthoxysilylpropyl)isocyanurate, γ-aminopropyltriéthoxysilane, γ-aminopropyltriméthoxysilane, aminopropyltriméthoxysilane, bis-γ-triméthoxysilypropyl)amine, N-phényl-γ-aminopropyltriméthoxysilane, triméthoxysilane à triple fonction amine, γ-aminopropylméthyldiéthoxysilane, γ-aminopropylméthyldiéthoxysilane, méthacryloxypropyltriméthoxysilane, méthylaminopropyltriméthoxysilane, γ-glycidoxypropyléthyldiméthoxysilane, γ-glycidoxypropyltriméthoxysilane, γ-glycidoxyéthyltriméthoxysilane, β-(3,4-époxycyclohexyl)propyltriméthoxysilane, β-(3,4-époxycyclohexyl)éthylméthyldiméthoxysilane, isocyanatopropyltriéthoxysilane, isocyanatopropylméthyldiméthoxysilane, β-cyanoéthyltriméthoxysilane, γ-acryloxypropyltriméthoxysilane, γ-méthacryloxypropylméthyldiméthoxysilane, 4-amino-3,3-diméthylbutyltriméthoxysilane, n-éthyl-3-triméthoxysilyl-2-méthylpropanamine et des mélanges de ceux-ci.

9. Composition selon la revendication 7 dans laquelle
le tensioactif est un tensioactif non ionique choisi dans le groupe constitué de polyéthylène glycol, polypropylène glycol, huile de ricin éthoxylée, éthoxylate d'acide oléique, éthoxylates d'alkylphénol, copolymères d'oxyde d'éthylène et d'oxyde de propylène et copolymères de silicones et de polyéthers, copolymères de silicones et de copolymères d'oxyde d'éthylène et d'oxyde de propylène et de mélanges de ceux-ci.

10. Composition selon la revendication 9 dans laquelle
le tensioactif non ionique est choisi dans le groupe constitué de copolymères d'oxyde d'éthylène et d'oxyde de propylène, copolymères de silicones et de polyéthers, copolymères de silicones et de copolymères d'oxyde d'éthylène et d'oxyde de propylène et de mélanges de ceux-ci.

11. Composition selon la revendication 7 dans laquelle
la charge autre qu'une nanoargile organique est choisie dans le groupe constitué de carbonate de calcium, carbonate de calcium précipité, carbonate de calcium colloïdal, carbonate de calcium traité avec des composés stéarate ou acide stéarique, silice fumée, silice précipitée, gels de silice, silices rendues hydrophobes, gels de silice hydrophiles, quartz écrasé, quartz moulu, alumine, hydroxyde d'aluminium, hydroxyde de titane, argile, kaolin, bentonite, montmorillonite, terre de diatomées, oxyde de fer, noir de carbone et graphite, mica, talc et de mélanges de ceux-ci.

12. Composition d'agent d'étanchéité, d'adhésif ou de revêtement préparée avec la composition contenant de la résine silylée durcissable à l'humidité selon une quelconque revendication précédente.

13. Composition contenant de la résine silylée durcie selon une quelconque des revendications 1 à 11.
